(19) **Europäisches Patentamt**
**European Patent Office**
**Office européen des brevets**

(11) **EP 2 162 881 B1**

(12) **EUROPEAN PATENT SPECIFICATION**

(45) Date of publication and mention
of the grant of the patent:
**23.01.2013 Bulletin 2013/04**

(51) Int Cl.:
**G10L 25/78** (2013.01)  **G10L 19/00** (2013.01)
**G10L 19/06** (2013.01)  **G10L 21/02** (2013.01)

(21) Application number: **08741859.6**

(22) Date of filing: **18.04.2008**

(86) International application number:
**PCT/SE2008/000285**

(87) International publication number:
**WO 2008/143569 (27.11.2008 Gazette 2008/48)**

(54) **VOICE ACTIVITY DETECTION WITH IMPROVED MUSIC DETECTION**

SPRACHAKTIVITÄTSDETEKTION MIT VERBESSERTER MUSIKDETEKTION

DÉTECTION D'ACTIVITÉ VOCALE AVEC DÉTECTION AMELIORÉE DE MUSIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.05.2007 US 939437 P**

(43) Date of publication of application:
**17.03.2010 Bulletin 2010/11**

(73) Proprietor: **Telefonaktiebolaget LM Ericsson
(publ)**
**164 83 Stockholm (SE)**

(72) Inventor: **SEHLSTEDT, Martin**
**S-976 33 Luleå (SE)**

(74) Representative: **Egrelius, Fredrik et al**
**Ericsson AB**
**Patent Unit Service Layer & Multimedia**
**164 80 Stockholm (SE)**

(56) References cited:
**WO-A2-02/065457     US-A1- 2004 210 436**

- **VÄHÄTALO A. ET AL.: 'Voice activity detection
for GSM adaptive multi-rate codec' SPEECH
CODING PROCEEDINGS, IEEE WORKSHOP
1999, pages 55 - 57, XP010345560**
- **EL-MALEH K. ET AL.: 'Speech/music
discrimination for multimedia applications'
INTERNATIONAL CONFERENCE ON
ACOUSTICS, SPEECH, AND SIGNAL
PROCESSING, 2000. ICASSP'00.
PROCEEDINGS. 2000 IEEE vol. 6, 2000, pages
2445 - 2448, XP010504799**

**Description**

**Technical field**

The present invention relates to an improved Voice Activity Detector (VAD) for music conditions, including background noise update and hangover addition. The present invention also relates to a system including an improved VAD.

**Background**

In speech coding systems used for conversational speech it is common to use discontinuous transmission (DTX) to increase the efficiency of the encoding (reduce the bit rate). The reason is that conversational speech contains large amounts of pauses embedded in the speech, e.g. while one person is talking the other one is listening. So with discontinuous transmission (DTX) the speech encoder is only active about 50 percent of the time on average and the rest is encoded using comfort noise. One example of a codec that can be used in DTX mode is the AMR codec, described in reference [1].

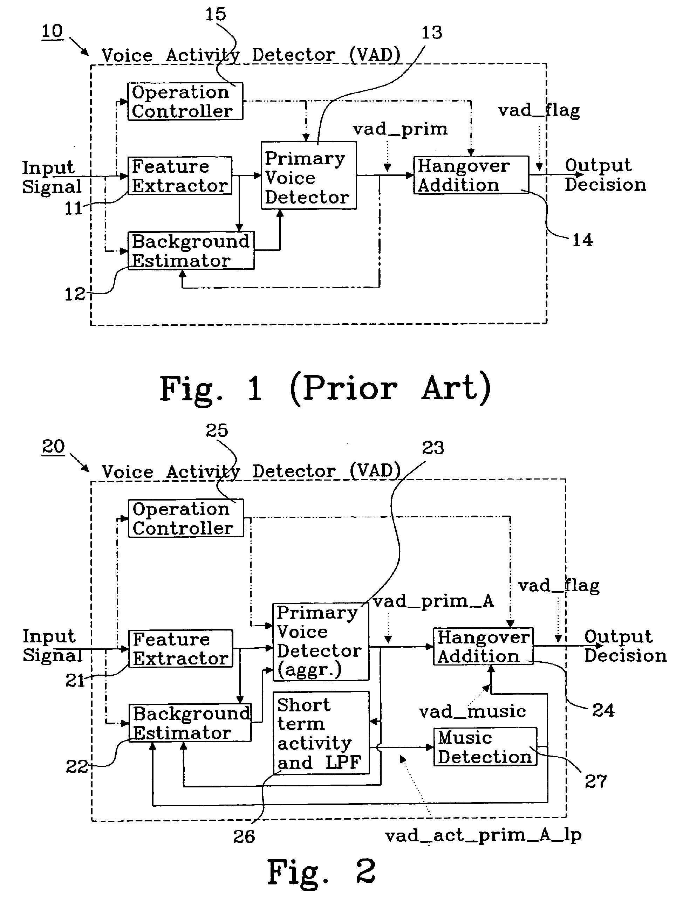

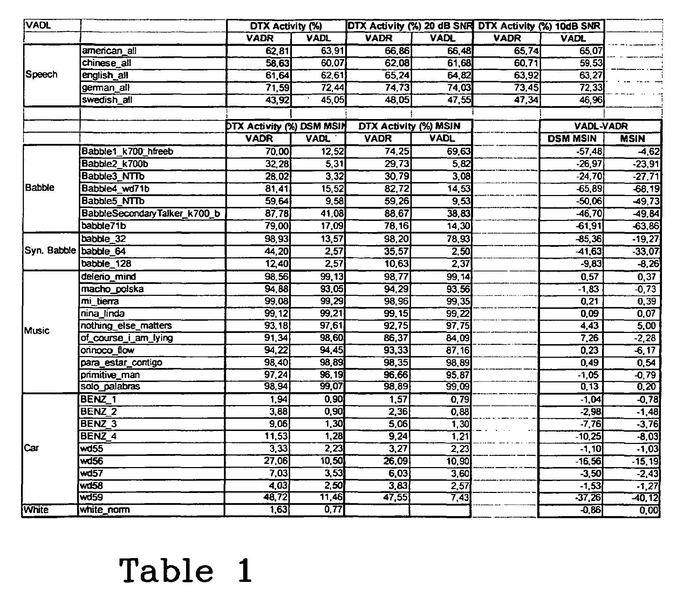

For important quality DTX operation, i.e. without degraded speech quality, it is important to detect the periods of speech in the input signal which is done by the Voice Activity Detector (VAD). With increasing use of rich media it is also important that the VAD detects music signals so that they are not replaced by comfort noise since this has a negative effect on the end user quality. Figure 1 shows an overview block diagram of a generalized VAD according to prior art, which takes the input signal (divided into data frames, 10-30 ms depending on the implementation) as input and produces VAD decisions as output (one decision for each frame).

Figure 1 illustrates the major functions of a generalized prior art VAD 10 which consists of: a feature extractor 11, a background estimator 12, a primary voice detector 13, a hangover addition block 14, and an operation controller 15. While different VAD use different features and strategies for estimation of the background, the basic operation is still the same.

The primary decision "vad_prim" is made by the primary voice detector 13. and is basically only a comparison of the feature for the current frame (extracted in the feature extractor 11), and the background feature (estimated from previous input frames in the background estimator 12). A difference larger than a threshold causes an active primary decision "vad_prim". The hangover addition block 14 is used to extend the primary decision based on past primary decisions to form the final decision "vad_flag". This is mainly done to reduce/remove the risk of mid speech and back end clipping of speech bursts. However, it is also used to avoid clipping in music passages, as described in references [1], [2] and [3]. As indicated in figure 1, an operation controller 15 may adjust the threshold for the primary detector 13 and the length of the hangover addition according to the characteristics of the input signal.

As indicated in figure 1, another important functional part of the VAD 10 is the estimation of the background feature in the background estimator 12. This may be done by two basically different principles, either by using the primary decision "vad_prim", i.e. with decision feed-back; or by using some other characteristics of the input signal, i.e. without decision feed-back. To some degree it is also possible to combine the two principles.

Below is a brief description of different VAD's and their related problems.

AMR VAD1

The AMR VAD1 is described in TS26.094, reference [1], and variation are described in reference [2].

Summary of basic operation, for more details see reference [1].

| | |
|---|---|
| Feature: | Summing of subband SNRs |
| Background: | Background estimate adaptation based on previous decisions |
| Control: | Threshold adaptation based on input noise level |
| Other: | Deadlock recovery analysis for step increases in noise level based on stationarity estimation. High frequency correlation to detect music/complex signals and allow for extended hangover for such signals. |

The major problem with this solution is that for some complex backgrounds (e.g. babble and especially for high input levels) causes a significant amount of excessive activity. The result is a drop in the DTX efficiency gain, and the associated system performance.

The use of decision feedback for background estimation also makes it difficult to change detector sensitivity. Since, even small changes in the sensitivity will have an effect on background estimation which may have a significant effect on future activity decisions. While it is the threshold adaptation based on input noise level that causes the level sensitivity it is desirable to keep the adaptation since it improves performance for detecting speech in low SNR stationary noise.

While the solution also includes a music detector which works for most of the cases, it has been identified music segments which are missed by the detector and therefore cause significant degradation of the subjective quality of the decoded (music) signal, i.e. segments are replaced by comfort noise.

EVRC VAD

The EVRC VAD is described in references [4] and [5] as EVRC RDA.
The main technologies used are:

| | |
|---|---|
| Feature: | Split band analysis, (with worst case band is used for rate selection in a variable rate speech codec. |
| Background: | Decision based increase with instant drop to input level. |
| Control: | Adaptive Noise hangover addition principle is used to reduce primary detector mistakes. Hong et al describes noise hangover adaptation in reference [6]. |

Existing split band solution EVRC VAD has occasional bad decisions which reduced the reliability of detecting speech and shows a too low frequency resolution which affects the reliability to detect music.

Voice activity detection by Freeman/Barret

Freeman, see reference [7], discloses a VAD Detector with independent noise spectrum estimation.
Barrett, see reference [8], discloses a tone detector mechanism that does not mistakenly characterize low frequency car noise for signaling tones.
Existing solutions based on Freeman/Barret occasionally show too low sensitivity (e.g. for background music).

AMR VAD2

The AMR VAD2 is described in TS26.094, reference [1].

Technology:

| | |
|---|---|
| Feature: | Summing of FFT based subband SNRs detector |
| Background: | Background estimate adaptation based on previous decisions |
| Control: | Threshold adaptation based on input signal level and adaptive noise hangover. |

As this solution is similar to the AMR VAD1 they also share the same type of problems.
Moreover, reference [13] discloses a speech coding system with a music classifier, where the encoder provides a classification of the input signal as one of noise, speech and music. The system uses a primary voice activity detector to distinguish speech and music from background noise based on one or more first signal parameters. If the signal is not classified as noise, a music classifier is used to differentiate speech frames from music frames based on one or more second signal parameters, wherein said music classifier has a memory in which the previous normalized pitch correlations are stored for calculating a running mean normalized pitch correlation and for deriving a running mean periodicity continuity counter. A frame is classified as music in dependence of comparisons of the running mean periodicity continuity counter and a running mean of a music continuity counter with predefined thresholds.

**Summary of the invention**

An object with the present invention is to provide a voice activity detector with an improved ability to detect music conditions compared to prior art voice activity detectors.
5 This object is achieved by a voice activity detector, as set forth in independent claim 1, a method for detecting music in an input signal using a voice activity detector, as set forth in independent claim 8, and a node of a telecommunication system comprising a voice activity detector, as set forth in independent claim 12.

An advantage with some of the preferred embodiments of the present invention, as set forth in the dependent claims, is that the risk of speech clipping is reduced compared to prior art voice activity detectors.

Another advantage with some of the preferred embodiments of the present invention, as set forth in the dependent claims, is that a significant improvement in activity for babble noise input, and car noise input, is achieved compared to prior art voice activity detectors.

Further objects and advantages may be found by a skilled person in the art from the detailed description.

**Brief description of drawings**

The invention will be described in connection with the following drawings that are provided as non-limited examples, in which:

Fig. 1 illustrates a generalized prior art VAD.

Fig. 2 shows a first preferred embodiment of a VAD having one primary voice detector and a short term voice activity detector according to the present invention.

Fig. 3 shows a second preferred embodiment of a VAD having two primary voice detectors and a short term voice activity detector according to the present invention.

Fig. 4 shows a comparison of primary decisions for the VAD of figure 3.

Fig. 5 shows a speech coder including a VAD.

Fig. 6 shows a terminal including a VAD according to a preferred embodiment of the invention.

**Abbreviations**

AMR    Adaptive Multi-Rate
AR    All-pole filter
ANT    Antenna
CN    Comfort Noise
CNB    Comfort Noise Buffer
CNC    Comfort Noise Coder
DTX    Discontinuous Transmission
DPLX    Duplex Filter
HO    HangOver
EVRC    Enhanced Variable Rate Codec
NB    Narrow Band
PVD    Primary Voice Detector
RX    Reception branch
VAD    Voice Activity Detector
VAF    Voice Activity Factor

**Detailed description**

The basic idea of this invention is the introduction of a new feature in the form of the short term activity measure of the decisions of the primary voice detector. This feature alone can be used for reliable detection of music-like input signals as described in connection with figure 2.

Figure 2 shows a first preferred embodiment of a VAD 20 comprising similar function blocks as the VAD described in connection with figure 1, such as a feature extractor 21, a background estimator 22, a one primary voice detector (PVD) 23, a hangover addition block 24, and an operation controller 25. The VAD 20 further comprises a short term voice activity detector 26 and a music detector 27.

An input signal is received in the feature extractor 21 and a primary decision "vad_prim_A" is made by the PVD 23, by comparing the feature for the current frame (extracted in the feature extractor 21) and the background feature (estimated from previous input frames in the background estimator 22). A difference larger than a threshold causes an active primary decision "vad_prim_A". A hangover addition block 24 is used to extend the primary decision based on past primary decisions to form the final decision "vad_flag". The short term voice activity detector 26 is configured to produce a short term primary activity signal "vad_act_prim_A" proportional to the presence of music in the input signal based on the primary speech decision produced by the PVD 23.

The primary voice detector 23 is provided with a short term memory in which "k" previous primary speech decisions "vad_prim_A" are stored. The short term activity detector 26 is provided with a calculating device configured to calculate the short term primary activity signal based on the content of the memory and current primary speech decision.

$$vad\_act\_prim\_A = \frac{m_{memory+current}}{k+1}$$

where $vad\_act\_prim\_A$ is the short term primary activity signal, $m_{memory+current}$ is the number of speech active decisions in the memory and current primary speech decision, and k is the number of previous primary speech decisions stored in the memory.

The short term voice activity detector is preferably provided with a lowpass filter to further smooth the signal, whereby a lowpass filtered short term primary activity signal "vad_act_prim_A_lp" is produced. The music detector 27 is configured to produce a music decision "vad_music" indicative of the presence of music in the input signal based on the short term primary activity signal "vad_act_prim_A", which may be lowpass filered or not, by applying a threshold to the short term primary activity signal.

In figure 2 "vad_music" is provided both to the hangover addition block 24 to further improve the VAD by detecting music in the input signal, and to the background estimator 22 to affect the update speed (or step size) for background estimation. However, "vad_music" may be used only for improving music detection in the hangover addition block 24 or for improving background estimation in the background estimator 22.

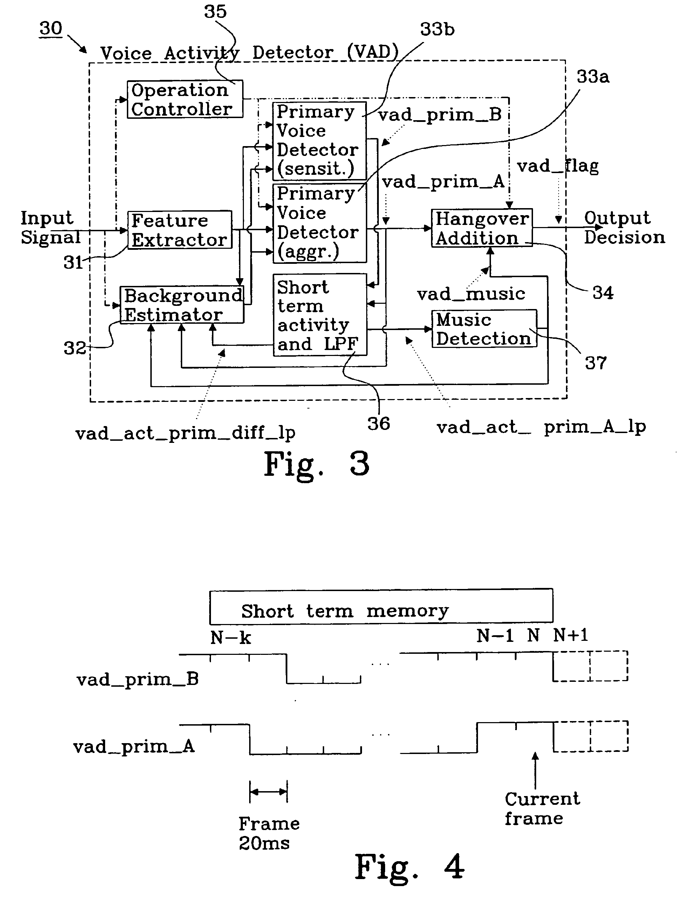

If the VAD is equipped with two primary voice activity detectors, one is aggressive and the other is sensitive, as described in connection with figure 3. If both the primary VADs are equipped with the new short term activity feature a large difference in short term primary activity between the two can be used as a warning that caution should be used in updating the background noise. Note that only the aggressive primary VAD is used to make the voice activity decision which will result in a reduction in the excessive activity cause by complex backgrounds, for example babble.

Figure 3 shows a second preferred embodiment of a VAD 30 comprising similar function blocks as the VAD described in connection with figure 2, such as a feature extractor 31, a background estimator 32, a first primary voice detector (PVD) 33a, a hangover addition block 34, an operation controller 35, a short term voice activity detector 36 and a music detector 37. The VAD 20 further comprises a second PVD 33b. The first PVD is aggressive and the second PVD is sensitive.

While it would be possible to use completely different techniques for the two primary voice detectors, it is more reasonable, from a complexity point of view, to use just one type of basic primary voice detector but to allow it to operate at different operation points (e.g. two different thresholds or two different significance thresholds as described in the co-pending International patent application PCT/SE2007/000118 assigned to the same applicant, see reference [11]). This would also guarantee that the sensitive detector always produces a higher activity than the aggressive detector and that the "vad_prim_A" is a subset of "vad_prim_B" as illustrated in Figure 4.

An input signal is received in the feature extractor 31 and primary decisions "vad_prim_A" and "vad_prim_B" are made by the first PVD 33a and the second PVD 33b, respectively, by comparing the feature for the current frame (extracted in the feature extractor 31) and the background feature (estimated from previous input frames in the background estimator 32). A difference larger than a threshold in the first PVD and second PVD causes active primary decisions "vad_prim_A" and "vad_primB" from the first PVD 33a and the second PVD 33b, respectively. A hangover addition block 34 is used to extend the primary decision "vad_prim_A" based on past primary decisions made by the first PVD 33a to form the final decision "vad_flag".

The short term voice activity detector 36 is configured to produce a short term primary activity signal "vad_act_prim_A" proportional to the presence of music in the input signal based on the primary speech decision produced by the first PVD 33a, and to produce an additional short term primary activity signal "vad_act_prim_B" proportional to the presence of music in the input signal based on the primary speech decision produced by the second PVD 33a.

The first PVD 33a and the second PVD 33b are each provided with a short term memory in which "k" previous primary speech decisions "vad_prim_A" and "vad_prim_B", respectively, are stored. The short term activity detector 36 is provided with a calculating device configured to calculate the short term primary activity signal "vad_act_prim_A" based on the content of the memory and current primary speech decision of the first PVD 33a. The music detector 37 is configured to produce a music decision "vad_music" indicative of the presence of music in the input signal based on the short term primary activity signal "vad_act_prim_A", which may be lowpass filered or not, by applying a threshold to the short term primary activity signal.

In figure 3 "vad_music" is provided both to the hangover addition block 34 to further improve the VAD by detecting music in the input signal, and to the background estimator 32 to affect the update speed (or step size) for background estimation. However, "vad_music" may be used only for improving music detection in the hangover addition block 34 or for improving background estimationin the background estimator 32.

The short term memories (one for vad_prim_A and one for vad_prim_B) keep track of the "k" previous PVD decisions and allow the short term activity of vad_prim_A for the current frame to be calculated as:

$$vad\_act\_prim\_A = \frac{m_{memory+current}}{k+1}$$

where *vad_act_prim_A* is the short term primary activity signal, $m_{memory+current}$ is the number of speech active decisions in the memory and current primary speech decision, and k is the number of previous primary speech decisions stored in the memory.

To smooth the signal further a simple AR filter is used

$$vad\_act\_prim\_A\_lp = (1-\alpha)\cdot vad\_act\_prim\_A\_lp + \alpha \cdot vad\_act\_prim\_A$$

where $\alpha$ is a constant in the range 0-1.0 (preferably in the range 0.005-0.1 to archive a significant low pass filtering effect).

The calculations of *vad_act_prim_B and vad_act_prim_B_lp* are done in an analogue way.

The short term voice activity detector 36 is further configured to produce a difference signal "vad_act_prim_diff_lp" based on the difference in activity of the first primary detector 33a and the second primary detector 33b, and the background estimator 32 is configured to estimate background noise based on feedback of primary speech decisions "vad_prim_A" from the first vice detector 33a and the difference signal "vad_act_prim_diff_lp" from the short term activity detector 36. With these variables it is possible to calculate an estimate of the difference in activity for the two primary detectors as:

$$vad\_act\_prim\_diff\_lp = vad\_act\_prim\_B\_lp - vad\_act\_prim\_A\_lp$$

The result is the two new features which are:

vad_act_prim_A_lp short term activity of the aggressive VAD

vad_act_prim_diff_lp difference in activity of the two VADs

These features are then used to:

- Make reliable music detection which activates music hangover addition.

- Improved noise update which allows for more reliable operation when using an aggressive VAD, where the aggressive VAD is used to reduce the amount of excessive activity in babble and other non-stationary backgrounds. (Especially the improved noise update may be less aggressive for music conditions)

Figure 4 shows a comparison of primary decisions for the first PVD 33a and the second PVD 33b. For each PVD a primary decision "vad_prim_A" and "vad_prim_B", respectively, is made for each frame of the input signal. The short term memory for each PVD is illustrated, each containing the primary decision of the current frame "N" and the previous "k" number of primary decisions. As a non-limiting example, "k" is selected to be 31.

Example of music detection for reliable music hangover addition

This example is based on the AMR-NB VAD, as described in reference [1], with the extension to use significance thresholds to adjust the aggressiveness of the VAD.

Speech consists of a mixture of voiced (vowels such as "a", "o") and unvoiced speech (consonants such as "s") which are combined to syllables. It is therefore highly unlikely that continuous speech causes high short term activity in the primary voice activity detector, which has a much easier job detecting the voiced segments compared to the unvoiced.

The music detection in this case is achieved by applying a threshold to the short term primary activity.

$$\text{if } vad\_act\_prim\_A\_lp > ACT\_MUSIC\_THRESHOLD \text{ then}$$
$$\text{Music\_detect} = 1;$$
$$\text{else}$$
$$\text{Music\_detect} = 0;$$
$$\text{end}$$

The threshold for music detection should be high enough not to mistakenly classify speech as music, and has to be tuned according to the primary detector used. Note that also the low-pass filter used for smoothing the feature may require tuning depending on the desired result.

Example of improved background noise update

For a VAD that uses decision feed back to update the background noise level the use of an aggressive VAD may result in unwanted noise update. This effect can be reduced with the use of the new feature vad_act_prim_diff_lp.
The feature compares the difference in short term activity of the aggressive and the sensitive primary voice detectors (PVDs) and allows the use of a threshold to indicate when it may be needed to stop the background noise update.

```
if (vad_act_prim_diff_lp > ACT_DIFF_WARNING) then
    act_diff_warning = 1
    else
    act_diff_warning = 0
    end
```

Here the threshold controls the operation point of the noise update, setting it to 0 will result in a noise update characteristics similar to the one achieved if only the sensitive PVD. While a large values will result in a noise update characteristics similar to the one achieved if only the aggressive PVD is used. It therefore has to be tuned according to the desired performance and the used PVDs.
This procedure of using the difference in short term activity, especially improves the VAD background noise update for music input signal conditions.
The present invention may be implemented in C-code by modifying the source code for AMR NB TS 26.073 ver 7.0.0, described in reference [9], by the following changes:

Changes in the file "vad1.h"

Add the following lines at line 32:

```
/* significance thresholds */
 /* Original value */
 #define SIG_0 0

 /* Optimized value */
 #define SIG_THR_OPT (Word16) 1331

 /* Floor value */
 #define SIG_FLOOR_05 (Word16) 256

 /* Activity difference threshold */
 #define ACT_DIFF_THR_OPT (Word16) 7209

 /* short term activity lp /
 #define CVAD_ADAPT_ACT (Word16) ((1.0 - 0.995) * MAX_16)

 /* Activity threshold for extended hangover */
```

```
#define CVAD_ACT_HANG_THR (Word16) (0.85 * MAX_16)
```

Add the following lines at line 77:

```
Word32 vadreg32; /* 32 bits vadreg */
Word16 vadcnt32; /* number of ones in vadreg32 */
  Word16 vadact32_lp; /* lp filtered short term activity */

  Word16 vadlprim; /* Primary decision for VAD1 */
  Word32 vad1reg32; /* 32 bits vadreg for VAD1 */
  Word16 vadlcnt32; /* number of ones in vadreg32 for VAD1*/
  Word16 vadlact32_lp; /* lp filtered short term activity for VAD1 */

  Word16 lowpowreg; /* History of low power flag */
```

Changes in the file "vad1.c"

Modify lines 435-442 as indicated below:

**Before the change:**

```
if (low_power != 0)
 {
   st->burst_count = 0; move16 ();
   st->hang_count = 0; move16 ();
   st->complex_hang_count = 0; move16 ();
   st->complex_hang_timer = 0; move16 ();
   return 0;
 }
```

**After the change:**

```
if (low_power != 0)
 {
   st->burst_count = 0; move16 ();
   st->hang_count = 0; move16 ();
   st->complex_hang count = 0; move16 ();
   /* Require four in a row to stop long hangover */
   test();logic16();
   if (st->lowpowreg & 0x7800) {
         st->complex_hang_timer = 0; move16 ();
   }
   return 0;
 }
```

Modify lines 521-544 as indicated below:

**Before the change:**

```
logic16 () ; test (); logic16 (); test (); test ();
if (((0x7800 & st->vadreg) == 0) &&
    ((st->pitch & 0x7800) == 0)
    && (st->complex_hang_count == 0))
 {
   alpha_up = ALPHA_UP1; move16 ();
```

```
      alpha_down = ALPHA_DOWN1; move16 ();
    }
  else
  {
    test ( ) ; test ( ) ;
    if ((st->stat_count == 0)
        && (st->complex_hang_count == 0))
    {
      alpha_up = ALPHA_UP2; move16 ();
      alpha_down = ALPHA_DOWN2; move16 ();
    }
    else
     {
       alpha_up = 0; move16 ();
       alpha_down = ALPHA3; move16 ();
       bckr_add = 0; move16 ();
     }
  }
```

**After the change;**

```
logic16 (); test (); logic16 (); test (); test ();
if (((0x7800 & st->vadreg) == 0) &&
    ((st->pitch & 0x7800) == 0)
    && {st->complex_warning == 0 )
    && (st->complex_hang_count == 0))
{
  alpha_up = ALPHA_UP1: move16 ();
  alpha_down ALPHA_DONN1; move16 ();
}
else
 {
   test (); test ();
   if ((st->stat_count == 0)
          && (st->complex_warning == 0 )
        && (st->complex_hang_count == 0))
    {
      alpha_up=ALPHA_UP2; move16 ();
     alpha_down = ALPHA_DOWN2; move16 ():
    }
   else
   {
        if((st->stat_count == 0) &&
          (st->complex_warning == 0)) {
         alpha_up = 0; move16 ();
         alpha_down = ALPHA_DOWN2; move16 ();
         bckr add = 1; move16 ();
        }
       else {
          alpha_up = 0; move16 ();
          alpha_down = ALPHA3; move16 ();
        bckr_add = 0; move16 ();
        }
   }
 }
```

Add the flowing lines at line 645:

```
/* Keep track of number of ones in vadreg32 and short term act */
logic32 (): test ();
if (st->vadreg32&0x00000001 ) {
  st->vadcnt32 = sub(st->vadcnt32,1); move16();
)
st->vadreg32 = L_shr(st->vadreg32,1); move32();
test();
if (low_power == 0) {
  logic16 (); test ();
  if (st->vadreg&0x4000) {
    st->vadreg32 = st->vadreg32 | 0x40000000; logic32(); move32();
    st->vadcnt32 = add(st->vadcnt32,1); move16();
  }
)
/* Keep track of number of ones in vadlreg32 and short term act */
logic32 (); test ();
 if (st->vad1req32&0x00000001 ) {
  st->vad1cnt32 = sub(st->vad1cnt32,1); move16 ();
 }
st->vad1reg32 = L_shr(st->vad1reg32,1); move32 ();
test();
if (low_power == 0) {
  test () ;
  if (st->vad1prim) {
    st->vadlreg32 = st->vad1reg32 | 0x40000000; logic32 () ; move32 ();
    st->vad1cnt32 = add(st->vad1cnt32,1); move16();
  }
)
/* update short term activity for aggressive primary VAD */
st->vadact32_lp = add(st->vadact32_lp,
                               mult_r(CVAD_ADAPT_ACT,
                                        sub(shl(st->vadcnt32,10),
                                              st->vadact32_lp)));
/* update short term activity for sensitive primary VAD */
st->vad1act32_lp = add(st->vad1act32_lp,
                               mult_r(CVAD_ADAPT_ACT,
                                        sub(shl(st->vad1cnt32,10),
                                              st->vad1act32_1p)));
```

Modify lines 678-687 as indicated below:

**Before the change:**

```
test ();
if (sub(st->corr_hp_fast, CVAD_THRESH_HANG) > 0)
{
   st->complex_hang_timer = add(st->complex_hang_timer, 1); move16 ();
}
else
{
   st->complex_hang_timer = 0; move16 ();
}
```

**After the change:**

```
/* Also test for activity in complex and increase hang time */
test (); logic16(); test();
if ((sub(st->vadact32_lp, CVRD_ACT_HANG_TKR) >0) | |
```

```
        (sub(st->corr_hp_fast, CVAD_THRESH_HANG) > 0))
    {
        st->complex_hang_timer = add(st->complex_hang_timer, 1); move16 ();
    }
    else
    {
        st->complex_hang_timer = 0; move16 ();
    }
    test () ;
    if (sub(sub(st->vad1act32_lp,st->vadact32_lp),
                ACT_DIFF_THR_OPT) >0)
    {
      st->complex_low = st->complex_low | 0x4000; logic16 (); move16 ();
    }
```

Modify lines 710-710 as indicated below:

**Before the change:**

```
    Word16 i;
    Word16 snr_sum;
    Word32 L_temp;
    Word16 vad_thr, temp, noise_level;
    Word16 low_power_flag:

    /*
        Calculate squared sum of the input levels (level)
        divided by the background noise components (bckr est).
        */
    L_temp = 0; move32();
```

**After the change:**

```
    Word16 i;
    Word16 snr_sum; /* Used for aggressive main vad */
    Word16 snr_sum_vad1 /* Used for sensitive vad */
    Word32 L_temp;
    Word32 L_temp_vad1
    Word16 vad_thr, temp, noise_level;
    Word16 low_power_flag;

    /*
        Calculate squared sum of the input levels (level)
        divided by the background noise components (bckr_est).
        */
    L_temp = 0: move32();
    L_temp_vad1= 0; move32();
```

Modify lines 721-732 as indicated below:

**Before the change:**

```
    for (i = 0; i < COMPLEN: i++)
    {
        Word16 exp;
```

```
exp = norm_s(st->bckr_est[i]);
temp shl<st->bckr_est[i], exp);
temp = div_s(shr(level[i], 1), temp);
temp = shl(temp, sub(exp, UNIRSHFT-1));
L temp = L mac(L_temp, temp, temp);
}
snr_sum = extract_h(L_shl(L_temp, 6));
snr_sum = mult(snr_sum, INV_COMPLEN);
```

**After the change:**

```
for (i = 0; i < COMPLEN; i++)
{
    Word16 exp;

    exp = norm_s(st->bckr_est[i]);
    temp = shl(st->bckr_est[i], exp);
    temp =div_s(shr(level[i], 1), temp);
    temp = shl(temp, sub(exp, UNIRSHFT-1));
    /* Also calc ordinary snr_sum -- Sensitive */
    L_temp_vad1 = L_mac(L_temp_vad1,temp, temp);
     /* run core sig_thresh adaptive VAD -- Aggressive */
     if (temp > SIG_THR_OPT) {
         /* definitely include this band */
         L_temp = L mac(L temp, temp, temp);
     } else {
         /*reduced this band*/
         if (temp > SIG_FLOOR_05) {
           /* include this band with a floor value */
           L_temp = L_mac(L_temp,SIG_FLOOR_05, SIG_FLOOR_05):
         }
         else {
           /* include low band with the current value */
         L_temp = L_mac(L_temp, temp, temp);
         }
     }
 }
 snr_sum = extract_h(L_shl(L_temp, 6));
 snr_sum = mult(snr_sum, INV_COMPLEN);
 snr_sum_vad1 = extract_h(L_shl(L_temp_vad1, 6)):
 snr_sum_vad1 = mult(snr_sum_vad1, INV_COMPLEN);
```

Add the flowing lines at line 754:

```
/* Shift low power register */
st->lowpowreg = shr(st->lowpowreg,1); move16 ();
```

Add the flowing lines at line 762:

```
/* Also make intermediate VAD1 decision */
st->vad1prim=0; move16 ();
test ();
if (sub(snr_sum vad1, vad_thr) > 0)
  {
    st->vadlprim = 1; move16 ();
  }
```

```
/* primary vad1 decsion made */
```

Modify lines 763-772 as indicated below:

**Before the change:**

```
/* check if the input power (pow_sum) is lower than a threshold" */
test ();
if (L_sub(pow_sum, VAD_POM_LOW) < 0)
{
    low_power_flag = 1; move16 ();
}
else
{
    low_power_flag = 0; move16 ();
}
```

**After the change:**

```
/* check if the input power (pow_sum) is lower than a threshold" */
test ();
if (L_sub(pow_sum, VAD_POW_LOW) < 0)
{
    low_power_flag = 1; move16 ( );
    st->lowpowreg = st->lowpowreg I 0x4000; logic16 ( ); move16 ( );
 }
 else
 {
    low_power_flag = 0; move16 ();
 }
```

Modify line 853 as indicated below:

**Before the change:**

```
state->vadreg = 0;
```

**After the change:**

```
state->vadreg = 0;
state->vadreg32 = 0;
state->vadcnt32 = 0;
state->vad1reg32 = 0;
state->vad1cnt32 = 0;
state->lowpowreg = 0;
state->vadact32_lp =0;
state->vad1act32_lp =0;
```

**Changes in the file "cod amr.c"**

**Add the flowing lines at line 375:**

```
dtx_noise_burst_warning <st->dtx_encSt);
```

**Changes in the file "dtx enc.h"**

**Add the flowing lines at line 37:**

```
#define DTX_BURST_THR 250
#define DTX_BURST_HO_EXT 1
#define DTX_MAXMIN_THR 80
#define DTX_MAX_HO_EXT_CNT 4
#define DTX_LP_AR_COEFF (Word16) ((1.0 - 0.95) * MAX_16) /* low pass filter */
```

**Add the flowing lines at line 54:**

```
/* Needed for modifications of VAD1 */
Word16 dtxBurstWarning;
Word16 dtxMaxMinDiff;
Word16 dtxLastMaxMinDiff;
Word16 dtxAvgLogEn;
Word16 dtxLastAvgLogEn;
Word16 dtxHoExtCnt;
```

**Add the flowing lines at line 139:**

```
/*
*****************************************************************
* Function : dtx_noise_burst_warning
* Purpose : Analyses frame energies and provides a warning
* that is used for DTX hangover extension
* Return value : DTX burst warning, 1 = warning, 0 = noise
*
*****************************************************************/
void dtx_noise_burst_warning (dtx_encState *st); /* i/o : State struct */
```

**Changes in the file "dtx_enc.c"**

**Add the flowing lines at line 119:**

```
> st->dtxBurstWarning = 0;
> st->dtxHoExtCnt = 0;
```

**Add the flowing lines at line 339:**

```
> st->dtxHoExtCnt = 0; move16C);
```

**Add the flowing lines at line 348:**

```
> /* 8 Consecutive VAD==0 frames save
> Background MaxMin diff and Avg Log En */
> st->dtxLastMaxMinDiff =
> add(st->dtxLastMaxMinDiff,
> mult_r(DTX_LP_AR_COEFF,
> sub(st->dtxMaxMinDiff,
> st->dtxLastMaxMinDiff))); move16( );
>
> st->dtxLastAvgLogEn = st->dtxAvgLogEn; move16( );
```

**Modify lines 355-367 as indicated below:**

**Before change:**

```
        test ( ) ;
        if (sub(add(st->decAnaElapsedCount, st->dtxHangoverCount),
              DTX_ELAPSED_FRAMES_THRESH1 < 0)
        {
           *usedMode = MRIYFX; move16( );
           /* if short time since decoder update, do not add extra HO */
        }
        /*
         else
           override VAD and stay in
           speech mode *usedMode
           and add extra hangover
        */
```

**After change:**

```
        test ( ) ;
         if (sub(add(st->decAnaElapsedCount, st->dtxHangoverCount),
              DTX_ELAPSED_FRAMES_THRESH1 < 0)
        {
           *usedMode = MRDTX; move 160;
           /* if short time since decoder update, do not add extra HO */
        }
          else
          {
            /*
               else
               override VAD and stay in
               speech mode *usedMode
               and add extra hangover
            */
            if (*usedMode != MRDTX)
            {
              /* Allow for extension of HO if
                     energy is dropping or
                     variance is high */
              test();
              if (st->dtxHangoverCount==0)
              {
```

```
                        test () ;
                        if (st->dtxBurstWarning!=0)
                            {
                              test ( );
                              if (sub(DTX_MAX_HO_EXT_CNT,
                                          st->dtxHoExtCnt)>0)
                                {
                                  st->dtxHangoverCount=DTX_BURST_HO_EXT; move16();
                                  st->dtxHoExtCnt = add(st->dtxHoExtCnt,1);
                                }
                            }
                        }
                      /* Reset counter at end of hangover for reliable stats */
                      test () ;
                      if (st->dtxHangoverCount==0) {
                        st->dtxHoExtCnt = 0; move16();
                      }
                    }
                  }
```

**Add the flowing lines at line 372:**

```
/*****
 *
 * Function : dtx_noise_burst warning
 * Purpose : Analyses frame energies and provides a warning
 * that is used for DTX hangover extension
 * Return value : DTX burst warning, 1 = warning, 0 = noise
 *
 *****/
void dtx_noise_burst_warning (dtx_encState *st /* i/o : State struct
*/
        )
        {
word16 tmp_hist_ptr;
Word16 tmp_max_log_en;
Word16 tmp_min_log_en;
Word16 first_half_en;
Word16 second_half_en;
Word16 i;
/* Test for stable energy in frame energy buffer */
/* Used to extend DTX hangover */
tmp_hist_ptr = st->hist_ptr; move16();
/* Calc energy for first half */
first half en =0; move16();
for(i=0;i<4;i++) {
    /* update pointer to circular buffer */
  tmp_hist_ptr = add(tmp_hlst_ptr, 1);
  test ( ) ;
  if (sub(tmp_hist_ptr, DTX_HIST_SIZE) == 0){
    tmp_hist_ptr = 0; move16 ();
   }
  first_half_en = add(first_half_en,
                              shr(st->log_en_hist[tmp_hist_ptr],1));
 }
first_half_en = shr(first_half_en,1);
/* Calc energy for second half */
second_half_en =0; move16 ();
for(i=0;i<4;i++) {
  /* update pointer to circular buffer */
```

```
    tmp_hist_ptr = add(tmp_hist_ptr, 1);
    test ( ) ;
    if (sub (tmp_hist_ptr, DTX_HIST_SIZE) == 0){
      tmp_hist_ptr = 0; move16();
    }
    second_half_en = add(second_half_en,
                                       shr(st->log_en_hist (tmp_hist_ptr],1));
  }
  second_half_en = shr(second_half_en,1);
  tmp_hist_ptr = st->hist_ptr; move16 ( ) ;
  tmp_max_log_en = st->log_en_hist [tmp_hist_ptr]; move16();
  tmp_min_log_en = tmp_max_log_en; move16 ( );
  for (i=0;i<8; i++) {
    tmp_hist_ptr = add (tmp_hist_ptr,1);
    test ( ) ;
    if (sub(tmp_hist_ptr, DTX_HIST_SIZE) ==0) {
      tmp_hist_ptr = 0; move16() ;
    )
    test ( ) ;
    if (sublst->log_en_hist [tmp_hist_ptr],tmp_max_log_en)>=0) {
      tmp_max_log_en = st->log_en_hist[tmp_hist_ptr); move16();
    )
    else {
      test ( ) ;
      if (sub(tmp min_log en,st->log en_hist[tmp_hist ptr]>0)} {
           tmp_min_log_en = st->log_en_hist[tmp_hist_ptr]; move16();
      }
    }
  }
  st->dtxMaxMinDiff = sub(tmp_max_log_en,tmp_min_log_en); move16();
  st->dtxAvgLogEn = add(shr(first_half_en,1),
                                    shr(second_half_en,1)); move16();
  /* Replace max with min */
  st->dtxAvgLogEn = add(sub(st->dtxAvgLogEn,shr(tmp_max_log_en,3)),
                                    shr(tmp_min_log_en,3)); move16();
  test (); test(): test (); test();
  st->dtxBurstWarning =
    (/* Majority decision on hangover extension */
     /* Not decreasing energy */
     add(
           add(
               (sub(first_half_en,add(second_half_en,DTX_BURST_THR))>0),
               /* Not Higer MaxMin differance */
               (sub(st->dtxMaxMinDiff,
                         add(st->dtxLastMaxMinDiff,DTX_MAXMIN_THR}>0)),
               /* Not higher average energy */
             shl((sub(st->dtxAvgLogEn,add(add(st->dtxLastAvgLogEn,
                                                         shr(st-
                                                         >dtxLastMaxMinDiff,2)),
                                           shl(st-
                                           >dtxHoExtCnt,4)))>0),1))))>=2;
                                           }
```

The modified c-code uses the following names on the above defined variables:

| Name in Description | Name in c-code |
| --- | --- |
| vad_act_prim_A | vadact32 |
| vad_act_prim_B | vad1act32 |
| vad_act_prim_A_lp | vadact32_lp |
| vad_act_prim_B_lp | vad1act32_lp |

(continued)

| Name in Description | Name in c-code |
|---|---|
| vad_act_prim_diff_lp | vad1act32_lp-vadact32_lp |
| ACT_MUSIC_THRESHOLD | CVAD_ACT_HANG_THR |
| ACT_DIFF_WARNING | ACT_DIFF_THR_OPT |

Where:

CVAD_ACT_HANG_THR = 0.85
ACT_DIFF_THE_OPT = 7209 (i.e. 0.22)
SIG_THR_OPT=1331 (i.e. 2.6)
SIG_FLOOR=256 (i.e. 0.5)

were found to work best.

The main program for the coder is located in coder.c which calls cod_amr in amr_enc.c which in turn calls vad1 which contains the most relevant functions in the c-code.

vad1 is defined in vad1.c which also calls (directly or indirectly): vad_decison, complex_vad, noise_estimate_ update, and complex_estimate_update all of which are defined in vad1.c
cnst_vad.h contains some VAD related constants
vad1.h defines the prototypes for the functions defined in vad1.c.

The calculation and updating of the short term activity features are made in the function complex_estimate_ adapt in vad1.c

In the C-code the improved music detector is used to control the addition of the complex hangover addition, which is enabled if a sufficient number of consecutive frames have an active music detector (Music_detect=1). See the function hangover_addition for details.

In the C-code the modified background update allows large enough differences in primary activity to affect the noise update through the st->complex_warning variable in the function noise_estimate_update.

These results only show the gain of the combined solutions (Improved music detector and modified background noise update); however significant gains may be obtained from the separate solutions.

A summary of the result can be found in table 1 in the drawings, where VADR is equivalent to the AMR VAD1 [1]. VADL is the optimized/evaluated VAD with the significance threshold [2.6] and the activity difference threshold [0.22]). Also the abbreviations DSM and MSIN are filters applied to the input signal before coding these are defined in the ITU G.191 [10].

The results show the performance of the different codec for some different input signals. The results are shown in the form of DTX activity, which is the amount of speech coded frames (but it also includes the activity added by the DTX hangover system see [1] and references therein for details). The top part of the table shows the results for speech with different amount of white background noise. In this case the VADL shows a slightly higher activity only for the clean speech case (where no noise is added), this should reduce the risk of speech clipping. For increasing amounts of white background noise, VADL efficiency is gradually improved.

The bottom part of the table shows the results for different types of pure music and noise inputs, for two types of signal input filters setups (DSM-MSIN and MSIN). For Music inputs most of the cases show an increase in activity which also indicates a reduced risk of replacing music with comfort noise. For the pure background noise inputs there is a significant improvement in activity since it is desirable from an efficiency point of view to replace most of the Babble and Car background noises with comfort noise. It is also interesting to see that the music detection capability of VADL is maintained even though the efficiency is increased for the background noises (babble/car).

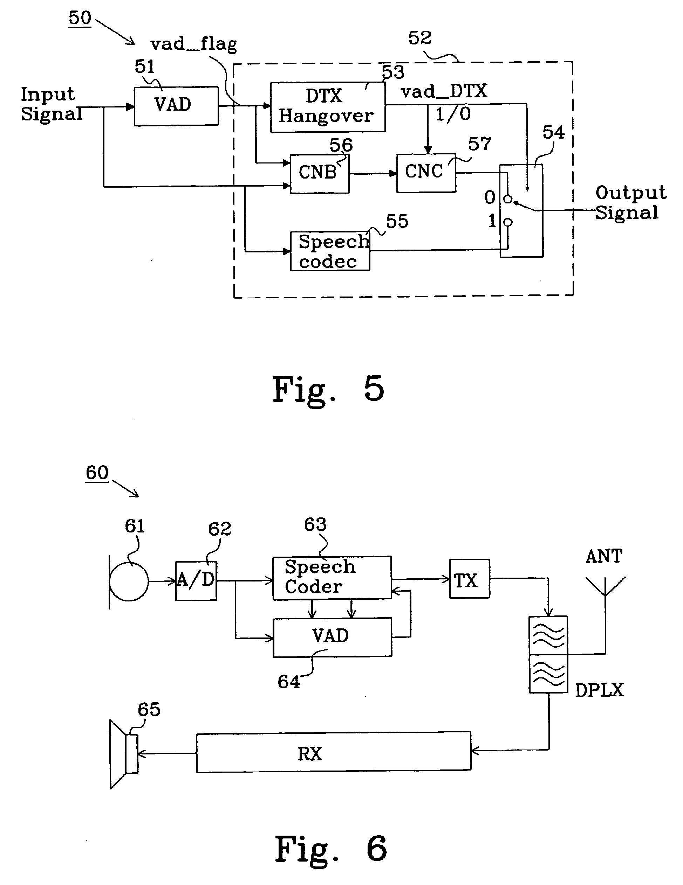

Figure 5 shows a complete encoding system 50 including a voice activity detector VAD 51, preferably designed according to the invention, and a speech coder 52 including Discontinuous Transmission/Comfort Noise (DTX/CN). Figure 5 shows a simplified speech coder 52, a detailed description can be found in reference [1] and [12]. The VAD 51 receives an input signal and generates a decision "vad_flag". The speech coder 52 comprises a DTX Hangover module 53, which may add seven extra frames to the "vad_flag" received from the VAD 51, for more details see reference [12]. If "vad_DTX"=" 1" then voice is detected, and if "vad_DTX"="0" then no voice is detected. The "vad_DTX" decision controls a switch 54, which is set in position 0 if "vad_DTX" is "0" and in position 1 if "vad_DTX" is "1".

"vad_flag" is forwarded to a comfort noise buffer (CNB) 56, which keeps track of the latest seven frames in the input signal. This information is forwarded to a comfort noise coder 57 (CNC), which also receive the "vad_DTX" to generate comfort noise during the non-voiced and non-music frames, for more details see reference [1]. The CNC is connected to position 0 in the switch 54.

Figure 6 shows a user terminal 60 according to the invention. The terminal comprises a microphone 61 connected to an A/D device 62 to convert the analogue signal to a digital signal. The digital signal is fed to a speech coder 63 and VAD 64, as described in connection with figure 5. The signal from the speech coder is forwarded to an antenna ANT, via a transmitter TX and a duplex filter DPLX, and transmitted there from. A signal received in the antenna ANT is forwarded to a reception branch RX, via the duplex filter DPLX. The known operations of the reception branch RX are carried out for speech received at reception, and it is repeated through a speaker 65.

**References**

[1] 3GPP, "Adaptive Multi-Rate (AMR) speech codec; Voice Activity Detector (VAD)" 3GPP TS 26.094 V7.0.0 (2006-07)

[2] Vähätalo, "Method and device for voice activity detection, and a communication device", US5963901A1, Nokia, Dec10, 1996

[3] Johansson, et. al, "Complex signal activity detection for improved speech/noise classification of an audio signal", US6424938B1, Telefonaktiebolaget L. M. Ericsson, July 23, 2002

[4] 3GPP2, "Enhanced Variable Rate Codec, Speech Service Option 3 for Wideband Spread Spectrum Digital Systems ", 3GPP2, C.S0014-A v1.0, 2004-05

[5] De Jaco, "Encoding rate selection in a variable rate vocoder", US5742734_A1, Qualcomm, Aug 10, 1994

[6] Hong, "Variable hangover time in a voice activity detector", US_5410632_A1, Motorola, Dec 23 , 1991

[7] Freeman, "Voice Activity Detection", US_5276765 A1, March 10 1989

[8] Barrett,"Voice activity detector", US_5749067_A1, March 8, 1996

[9] 3GPP, "Adaptive Multi-Rate (AMR); ANSI C source code", 3GPP TS 26.073 V7.0.0 (2006-07)

[10] ITU-T, "Software tools for speech and audio coding standardization", ITU-T G.191, Sept. 2005

[11] Sehlstedt, "A voice detector and a method for suppressing sub-bands in a voice detector" PCT/SE2007/000118, Feb 9, 2007

[12] 3GPP "Adaptive Multi-Rate (AMR) speech codec; Source Control Rate Operation" 3GPP TS 26.093 V7.0.0 (2006-07)

[13] WO 02/065 457 A2

**Claims**

1. A voice activity detector (20; 30) comprising at least a first primary voice detector (23; 33a), a feature extractor (21; 31) and a background noise estimator (22; 32), said voice activity detector (20; 30) is configured to output a speech decision "vad_flag" indicative of the presence of speech in an input signal based on at least a primary speech decision "vad_prim_A" produced by said first primary voice detector (23; 33a), the input signal is divided into frames and fed to the feature extractor (21; 31), said primary speech decision "vad_prim_A" is based on a comparison of a feature extracted in the feature extractor (21; 31) for a current frame of the input signal and a background noise feature estimated from previous frames of the input signal in the background noise estimator (22; 32),
**characterized in that**
said first primary voice detector (23; 33a) is provided with a memory in which previous primary speech decisions "vad_prim_A" are stored,
said voice activity detector (20; 30) further comprises a short term activity detector (26; 36),

said voice activity detector (20; 30) is further configured to produce a music decision "vad_music" indicative of the presence of music in the input signal based on a short term primary activity signal "vad_act_prim_A" produced by said short term activity detector (26; 36) based on the primary speech decision "vad_prim_A" produced by the first primary voice detector (23; 33a),

said short term primary activity signal "vad_act_prim_A" is proportional to the presence of music in the input signal, said short term activity detector (26; 36) is provided with a calculating device configured to calculate the short term primary activity signal "vad__act_prim_A" based on the relationship:

$$vad\_act\_prim\_A = \frac{m_{memory+current}}{k+1}$$

where vad_act_prim_A is the short term primary activity signal, $m_{memory+current}$ is the number of speech active decisions in the memory and current primary speech decision "vad_prim_A", and k is the number of previous primary speech decisions "vad_prim_A" stored in the memory.

2. The voice activity detector according to claim 1, wherein said voice activity detector (20; 30) further comprises a music detector (27; 37) configured to produce the music decision "vad_music" by applying a threshold to the short term primary activity signal "vad_act_prim_A".

3. The voice activity detector according to any of claims 1 or 2, wherein said short term activity detector (26; 36) is further provided with a filter to smooth the short term primary activity signal "vad_act_prim_A" and produce a lowpass filtered short term primary activity signal "vad_act_prim_A_lp".

4. The voice activity detector according to any of claims 1-3 further comprising a hangover addition block (24; 34) configured to produce said speech decision "vad_flag" based on said primary speech decision "vad_prim_A", wherein the speech decision further is based on the music decision "vad_music" which is provided to the hangover addition block (24; 34).

5. The voice activity detector according to any of claims 1-4, wherein the background noise estimator (22; 32) is configured to provide the background noise feature to at least said first primary voice detector (23; 33a), and wherein the music decision "vad_music" is provided to the background noise estimator (22; 32) and an update speed or step size of the background noise feature is based on the music decision "vad_music".

6. The voice activity detector according to any of claims 1-5, wherein the voice activity detector (30) further comprises a second primary voice detector (33b), being more sensitive to speech than said first primary voice detector (33a), said second primary voice detector (33b) is configured to produce an additional primary speech decision "vad_prim_B" indicative of the presence of speech in the input signal analogue to the primary speech decision "vad_prim_A" produced by the first primary voice detector (33a), said short term activity detector (36) is configured to produce a difference signal "vad_act_prim_diff_lp" based on the difference in activity of the first primary detector (33a) and the second primary detector (33b), the background noise estimator (32) is configured to estimate background noise based on feedback of primary speech decisions "vad_prim_A" from the first voice detector (33a) and said difference signal "vad_act_prim_dift_lp" from the short term activity detector (36).

7. The voice activity detector according to claim 6, wherein the background noise estimator (32) is configured to update background noise based on the difference signal "vad_act_prim_diff_lp" produced by the short term activity detector (36) by applying a threshold to the difference signal.

8. A method for detecting music in an input signal using a voice activity detector (20; 30) comprising at least a first primary voice detector (23; 33a), a feature extractor (21; 31), a background noise estimator (22; 32) and a short term activity detector (26; 36), said method comprising the steps:

- feeding an input signal divided into frames to the feature extractor (21; 31),
- producing a primary speech decision "vad_prim_A" by the first primary voice detector (23; 33a) based on a comparison of a feature extracted in the feature extractor (21; 31) for a current frame of the input signal and a background noise feature estimated from previous frames of the input signal in the background noise estimator (22; 32),
- outputting a speech decision "vad_flag" indicative of the presence of speech in the input signal based on at least the primary speech decision "vad_prim_A",
**characterized by**
- producing a short term primary activity signal "vad_act_prim_A", in the short term activity detector (26; 36), proportional to the presence of music in the input signal based on the the relationship:

$$vad\_act\_prim\_A = \frac{m_{memory+current}}{k+1}$$

where *vad_act prim_A* is the short term primary activity signal, $m_{memory+current}$ is the number of speech active decisions stored in a memory and current primary speech decision "vad_prim_A", and k is the number of previous primary speech decisions "vad_prim_A" stored in the memory, and
- producing a music decision "vad_music" indicative of the presence of music in the input signal based on a short term primary activity signal "vad_act_prim_A" produced by said short term activity detector (26; 36).

9. The method according to claim 8, wherein the voice activity detector further comprises a music detector (27; 37), said method further comprises producing the music decision, in the music detector (27; 37), by applying a threshold to the short term primary activity signal "vad_act_prim_A".

10. The method according to any of claims 8 or 9, wherein said speech decision "vad_flag" is based on the produced music decision "vad_music".

11. The method according to any of claims 8-10, wherein the method further comprises:

- providing the background noise feature to said at least first primary voice detector wherein an update speed or step size of the background noise feature is based on the produced music decision "vad_music".

12. A node of a telecommunication system comprising a voice activity detector (20; 30) as defined in any of claims 1-7.

13. The node according to claim 12, wherein the node is a terminal (60).


**Patentansprüche**

1. Sprachaktivitätserfassungsvorrichtung (20; 30), umfassend zumindest eine erste Primärspracherfassungseinrichtung (23; 33a), eine Merkmalsentnahmeeinrichtung (21; 31) und eine Hintergrundrauschschätzeinrichtung (22; 32), wobei die Sprachaktivitätserfassungsvorrichtung (20; 30) konfiguriert ist, um eine Sprachentscheidung "vad_flag" auszugeben, die das Vorhandensein von Sprache in einem Eingangssignal auf der Grundlage zumindest einer Primärsprachentscheidung "vad_prim_A" angibt, die durch die erste Primärspracherfassungseinrichtung (23; 33a) erzeugt ist, wobei das Eingangssignal in Rahmen unterteilt wird und der Merkmalsentnahmeeinrichtung (21; 31) zugeführt wird, wobei die Primärsprachentscheidung "vad_prim_A" auf einem Vergleich eines Merkmals, das in der Merkmalsentnahmeeinrichtung (21; 31) für einen momentanen Rahmen des Eingangssignals entnommen ist, und eines Hintergrundrauschmerkmals basiert, das aus vorhergehenden Rahmen des Eingangssignals in der Hintergrundrauschschätzeinrichtung (22; 32) geschätzt ist,
**dadurch gekennzeichnet, dass**
die erste Primärspracherfassungseinrichtung (23; 33a) mit einem Speicher versehen ist, in dem vorhergehende Primärsprachentscheidungen "vad_prim_A" gespeichert sind,
die Sprachaktivitätserfassungsvorrichtung (20; 30) weiterhin eine Erfassungseinrichtung für kurzfristige Aktivität (26; 36) umfasst,
wobei die Sprachaktivitätserfassungsvorrichtung (20; 30) weiterhin konfiguriert ist, um eine Musikentscheidung "vad_music" zu erzeugen, die das Vorhandensein von Musik in dem Eingangssignal auf der Grundlage eines kurzfristigen Primäraktivitätssignals "vad_act_prim_A" angibt, das durch die Erfassungseinrichtung für kurzfristige Aktivität (26; 36) auf der Grundlage der Primärsprachentscheidung "vad_prim_A" erzeugt ist, die durch die erste Primärspracherfassungseinrichtung (23; 33a) erzeugt ist,
das kurzfristige Primäraktivitätssignal "vad_act_prim_A" proportional zu dem Vorhandensein von Musik in dem Eingangssignal ist,
die Erfassungseinrichtung für kurzfristige Aktivität (26; 36) mit einer Berechnungseinrichtung versehen ist, die konfiguriert ist, um das kurzfristige Primäraktivitätssignal "vad_act_prim_A" auf der Grundlage der Beziehung zu berechnen:

$$vad\_act\_prim\_A =$$

$$\frac{m_{memory+current}}{k+1}$$

wobei vad_act_prim_A das kurzfristige Primäraktivitätssignal ist, $m_{memory+current}$ die Anzahl von Sprachaktivitätsentscheidungen in dem Speicher und die momentane Primärsprachentscheidung "vad_prim_A" ist, und k die Anzahl von vorhergehenden Primärsprachentscheidungen "vad_prim_A" ist, die in dem Speicher gespeichert ist.

2. Sprachaktivitätserfassungsvorrichtung gemäß Anspruch 1, wobei die Sprachaktivitätserfassungsvorrichtung (20; 30) weiterhin eine Musikerfassungseinrichtung (27; 37) umfasst, die konfiguriert ist, um die Musikentscheidung "vad_music" durch Anlegen eines Schwellwerts an das kurzfristige Primäraktivitätssignal "vad_act_prim_A" zu erzeugen.

3. Sprachaktivitätserfassungsvorrichtung gemäß Anspruch 1 oder 2, wobei die Erfassungseinrichtung für kurzfristige Aktivität (26; 36) weiterhin mit einem Filter versehen ist, um das kurzfristige Primäraktivitätssignal "vad_act_prim_ A" zu glätten und um ein tiefpassgefiltertes kurzfristiges Primäraktivitätssignal "vad_act_prim_A_lp" zu erzeugen.

4. Sprachaktivitätserfassungsvorrichtung gemäß zumindest einem der Ansprüche 1 bis 3, weiterhin umfassend einen Überhanghinzufügungsblock (24; 34), der konfiguriert ist, um die Sprachentscheidung "vad_flag" auf der Grundlage der Primärsprachentscheidung "vad_prim_A" zu erzeugen, wobei die Sprachentscheidung weiterhin auf der Musikentscheidung "vad_music" basiert, die dem Überhanghinzufügungsblock (24; 34) bereitgestellt wird.

5. Sprachaktivitätserfassungsvorrichtung gemäß zumindest einem der Ansprüche 1 bis 4, wobei die Hintergrundrauschschätzeinrichtung (22; 32) konfiguriert ist, um das Hintergrundrauschmerkmal zumindest zu der ersten Primärspracherfassungseinrichtung (23; 33a) zuzuführen, und wobei die Musikentscheidung "vad_music" der Hintergrundrauschschätzeinrichtung (22; 32) bereitgestellt wird, und eine Aktualisierungsgeschwindigkeit oder Schrittgröße des Hintergrundrauschmerkmals auf der Musikentscheidung "vad_music" basiert.

6. Sprachaktivitätserfassungsvorrichtung gemäß zumindest einem der Ansprüche 1 bis 5, wobei die Sprachaktivitätserfassungsvorrichtung (30) weiterhin eine zweite Primärspracherfassungseinrichtung (33b) umfasst, die gegenüber Sprache empfindlicher ist als die erste Primärspracherfassungseinrichtung (33a), wobei die zweite Primärspracherfassungseinrichtung (33b) konfiguriert ist, um eine zusätzliche Primärsprachentscheidung "vad_prim_B" zu erzeugen, die das Vorhandensein von Sprache in dem Eingangssignal analog zu der Primärsprachentscheidung "vad_ prim_A" angibt, die durch die erste Primärspracherfassungseinrichtung (33a) erzeugt ist, wobei die Erfassungseinrichtung für kurzfristige Aktivität (36) konfiguriert ist, um ein Differenzsignal "vad_act_prim_diff_lp" auf der Grundlage der Differenz in der Aktivität der ersten Primärerfassungseinrichtung (33a) und der zweiten Primärerfassungseinrichtung (33b) zu erzeugen, wobei die Hintergrundrauschschätzeinrichtung (32) konfiguriert ist, um das Hintergrundrauschen auf der Grundlage einer Rückkoppelung von Primärsprachentscheidungen "vad_prim_A" aus der ersten Spracherfassungseinrichtung (33a) und dem Differenzsignal "vad_act_prim_diff_lp" aus der Erfassungseinrichtung für kurzfristige Aktivität (36) zu schätzen.

7. Sprachaktivitätserfassungsvorrichtung gemäß Anspruch 6, wobei die Hintergrundrauschschätzeinrichtung (32) konfiguriert ist, um Hintergrundrauschen auf der Grundlage des Differenzsignals "vad_act_prim_diff_lp", das durch die Erfassungseinrichtung für kurzfristige Aktivität (36) erzeugt ist, durch Anlegen eines Schwellwerts an das Differenzsignal zu aktualisieren.

8. Verfahren zum Erfassen von Musik in einem Eingangssignal unter Verwendung einer Sprachaktivitätserfassungsvorrichtung (20; 30), die umfasst: zumindest eine erste Primärspracherfassungseinrichtung (23; 33a), eine Merkmalsentnahmeeinrichtung (21, 31), eine Hintergrundrauschschätzeinrichtung (22; 32) und eine Erfassungseinrichtung für kurzfristige Aktivität (26; 36), wobei das Verfahren die Schritte umfasst:

- Zuführen eines Eingangssignals, das in Rahmen unterteilt ist, zu der Merkmalsentnahmeeinrichtung (21; 31),

- Erzeugen einer Primärsprachentscheidung "vad_prim_A" durch die erste Primärspracherfassungseinrichtung (23; 33a) auf der Grundlage eines Vergleichs eines Merkmals, das in der Merkmalsentnahmeeinrichtung (21; 31) für einen momentanen Rahmen des Eingangssignals entnommen ist, und eines Hintergrundrauschmerkmals, das aus vorhergehenden Rahmen des Eingangssignals in der Hintergrundrauschschätzeinrichtung (22; 32) geschätzt ist,

- Ausgeben einer Sprachentscheidung "vad_flag", die das Vorhandensein von Sprache in dem Eingangssignal auf der Grundlage zumindest der Primärsprachentscheidung "vad_prim_A" angibt,

**gekennzeichnet durch**

- Erzeugen eines kurzfristigen Primäraktivitätssignals "vad_act_prim_A" in der Erfassungseinrichtung für kurzfristige Aktivität (26; 36), das proportional zu dem Vorhandensein von Musik in dem Eingangssignal ist auf der Grundlage der Beziehung:

$$\text{vad\_act\_prim\_A} = \frac{m_{memory+current}}{k+1}$$

wobei vad_act_prim_A das kurzfristige Primäraktivitätssignal ist, $m_{memory+current}$ die Anzahl von Sprachaktivitätsentscheidungen, die in einem Speicher gespeichert sind, und eine momentane Primärsprachentscheidung "vad_prim_A" ist, und k die Anzahl von vorhergehenden Primärsprachentscheidungen "vad_prim_A" ist, die in dem Speicher gespeichert ist, und

- Erzeugen einer Musikentscheidung "vad_music", die das Vorhandensein von Musik in dem Eingangssignal auf der Grundlage eines kurzfristigen Primäraktivitätssignal "vad_act_prim_A" angibt, das **durch** die Erfassungseinrichtung für kurzfristige Aktivität (26; 36) erzeugt ist.

9. Verfahren gemäß Anspruch 8, wobei die Sprachaktivitätserfassungsvorrichtung weiterhin eine Musikerfassungseinrichtung (27; 37) umfasst, wobei das Verfahren weiterhin umfasst Erzeugen der Musikentscheidung in der Musikerfassungseinrichtung (27; 37) durch Anlegen eines Schwellwerts an das kurzfristige Primäraktivitätssignal "vad_act_prim_A".

10. Verfahren gemäß zumindest Anspruch 8 oder 9, wobei die Sprachentscheidung "vad_flag" auf der erzeugten Musikentscheidung "vad_music" basiert.

11. Verfahren gemäß zumindest einem der Ansprüche 8 bis 10, wobei das Verfahren weiterhin umfasst:

- Bereitstellen des Hintergrundrauschmerkmals für die zumindest eine erste Primärspracherfassungseinrichtung, wobei eine Aktualisierungsgeschwindigkeit oder Schrittgröße des Hintergrundrauschmerkmals auf der erzeugten Musikentscheidung "vad_music" basiert.

12. Knoten eines Telekommunikationssytems, umfassend eine Sprachaktivitätserfassungsvorrichtung (20; 30) gemäß zumindest einem der Ansprüche 1 bis 7.

13. Knoten gemäß Anspruch 12, wobei der Knoten ein Endgerät (60) ist.

**Revendications**

1. Détecteur d'activité vocale (20 ; 30) qui comprend au moins un premier détecteur vocal primaire (23 ; 33a), un extracteur de caractéristique (21 ; 31), et un estimateur de bruit de fond (22 ; 32), ledit détecteur d'activité vocale (20 ; 30) étant configuré pour fournir une décision de parole « vad_flag » qui indique la présence d'une parole dans un signal d'entrée, sur la base d'au moins une décision de parole primaire « vad_prim_A » produite par ledit premier détecteur vocal primaire (23 ; 33a), le signal d'entrée étant divisé en trames et fourni à l'extracteur de caractéristiques (21 ; 31), ladite décision de parole primaire « vad_prim_A » étant basée sur une comparaison entre une caractéristique extraite dans l'extracteur de caractéristiques (21 ; 31) pour une trame en cours du signal d'entrée, et une caractéristique de bruit de fond estimée à partir de trames précédentes du signal d'entrée dans l'estimateur de bruit de fond (22 ; 32),

**caractérisé en ce que**

ledit premier détecteur vocal primaire (23 ; 33a) est muni d'une mémoire dans laquelle sont stockées les décisions de parole primaires antérieures « vad_prim_A »,

ledit détecteur d'activité vocale (20 ; 30) comprend en outre un détecteur d'activité à court terme (26 ; 36),

ledit détecteur d'activité vocale (20 ; 30) est en outre configuré pour produire une décision de musique « vad_music » qui indique la présence de musique dans le signal d'entrée sur la base d'un signal d'activité à court terme primaire «vad_act_prim_A» produit par ledit détecteur d'activité à court terme (26 ; 36) sur la base de la décision de parole primaire « vad_prim_A » produite par le premier détecteur vocal primaire (23 ; 33a),

ledit signal d'activité à court terme primaire « vad_act_prim_A » est proportionnel à la présence de musique dans le signal d'entrée,

ledit détecteur d'activité à court terme (26 ; 36) est muni d'un dispositif de calcul configuré pour calculer le signal d'activité à court terme primaire « vad_act_prim_A » sur la base de la relation suivante :

$$vad\_act\_prim\_A = \frac{m_{memory+current}}{k+1}$$

où *vad_act_prim_A* est le signal d'activité à court terme primaire, $m_{memory+current}$ est le nombre de décisions de parole actives dans la mémoire et la décision de parole primaire en cours « vad_prim_A », et k est le nombre de décisions de parole primaires antérieures « vad_prim_A » stockées dans la mémoire.

**2.** Détecteur d'activité vocale selon la revendication 1, dans lequel ledit détecteur d'activité vocale (20 ; 30) comprend en outre un détecteur de musique (27 ; 37) configuré pour produire la décision de musique « vad_music » en appliquant un seuil au signal d'activité à court terme primaire « vad_act_prim_A ».

**3.** Détecteur d'activité vocale selon l'une quelconque des revendications 1 ou 2, dans lequel ledit détecteur d'activité à court terme (26 ; 36) est en outre muni d'un filtre afin de lisser le signal d'activité à court terme primaire « vad_act_prim_A » et de produire un signal d'activité à court terme primaire filtré et passe-bas « vad_act_prim_A_lp ».

**4.** Détecteur d'activité vocale selon l'une quelconque des revendications 1 à 3, qui comprend en outre un bloc d'addition hérité (24 ; 34) configuré pour produire ladite décision de parole « vad_flag » sur la base de ladite décision de parole primaire «vad_prim_A », dans lequel ladite décision de parole est en outre basée sur la décision de musique « vad_music » qui est fournie au bloc d'addition hérité (24 ; 34).

**5.** Détecteur d'activité vocale selon l'une quelconque des revendications 1 à 4, dans lequel l'estimateur de bruit de fond (22 ; 32) est configuré pour fournir la caractéristique de bruit de fond audit premier détecteur vocal primaire (23 ; 33a), et dans lequel la décision de musique « vad_music » est fournie à l'estimateur de bruit de fond (22 ; 32) et une vitesse ou taille de mise à jour de la caractéristique de bruit de fond est basée sur la décision de musique « vad_music ».

**6.** Détecteur d'activité vocale selon l'une quelconque des revendications 1 à 5, dans lequel le détecteur d'activité vocale (30) comprend en outre un second détecteur vocal primaire (33b) qui est plus sensible à la parole que ledit premier détecteur vocal primaire (33a), ledit second détecteur vocal primaire (33b) étant configuré pour produire une décision de parole primaire supplémentaire « vad_prim_B » qui indique la présence d'une parole dans le signal d'entrée, analogue à la décision de parole primaire « vad_prim_A » produite par le premier détecteur vocal primaire (33a), ledit détecteur d'activité à court terme (36) étant configuré pour produire un signal de différence « vad_act_prim_diff_lp » sur la base de la différence d'activité du premier détecteur primaire (33a) et du second détecteur primaire (33b), l'estimateur de bruit de fond (32) étant configuré pour estimer le bruit de fond sur la base du retour des décisions de parole primaires « vad_prim_A » de la part du premier détecteur vocal (33a) et dudit signal de différence « vad_act_prim_diff_lp » qui provient du détecteur d'activité à court terme (36).

**7.** Détecteur d'activité vocale selon la revendication 6, dans lequel l'estimateur de bruit de fond (32) est configuré pour mettre à jour le bruit de fond sur la base du signal de différence « vad_act_prim_diff_lp » produit par le détecteur d'activité à court terme (36) en appliquant un seuil au signal de différence.

**8.** Procédé de détection de musique dans un signal d'entrée en utilisant un détecteur d'activité vocale (20 ; 30) qui comprend au moins un premier détecteur vocal primaire (23 ; 33a), un extracteur de caractéristiques (21 ; 31), un estimateur de bruit de fond (22 ; 32) et un détecteur d'activité à court terme (26 ; 36), ledit procédé comprenant les étapes consistant à :

- fournir un signal d'entrée divisé en trames à l'extracteur de caractéristiques (21 ; 31),
- produire une décision de parole primaire « vad_prim_A » par le premier détecteur vocal primaire (23 ; 33a) sur la base d'une comparaison entre une caractéristique extraite dans l'extracteur de caractéristiques (21 ; 31) pour une trame en cours du signal d'entrée, et une caractéristique de bruit de fond estimée à partir de trames précédentes du signal d'entrée dans l'estimateur de bruit de fond (22 ; 32),
- fournir une décision de parole « vad_flag » qui indique la présence d'une parole dans un signal d'entrée, sur la base de ladite décision de parole primaire « vad_prim_A »,
**caractérisé par**
- la production d'un signal d'activité à court terme « vad_act_prim_A », dans le détecteur d'activité à court terme (26 ; 36), proportionnel à la présence de musique dans le signal d'entrée, sur la base de la relation :

$$vad\_act\_prim\_A = \frac{m_{memory+current}}{k+1}$$

où *vad_act_prim_A* est le signal d'activité à court terme primaire, $m_{memory+current}$ est le nombre de décisions de parole actives dans la mémoire et la décision de parole primaire en cours « vad_prim_A », et k est le nombre de décisions de parole primaires antérieures « vad_prim_A » stockées dans la mémoire, et
- la production d'une décision de musique « vad_music » qui indique la présence de musique dans le signal d'entrée sur la base d'un signal d'activité à court terme primaire « vad_act_prim_A » produit par ledit détecteur d'activité à court terme (26 ; 36).

9. Procédé selon la revendication 8, dans lequel le détecteur d'activité vocale comprend en outre un détecteur de musique (27 ; 37), ledit procédé comprenant en outre la production de la décision de musique, dans le détecteur de musique (27 ; 37), en appliquant un seuil au signal d'activité à court terme primaire « vad_act_prim_A ».

10. Procédé selon l'une quelconque des revendications 8 ou 9, dans lequel ladite décision de parole « vad_flag » est basée sur la décision de musique produite « vad_music ».

11. Procédé selon l'une quelconque des revendications 8 à 10, qui comprend en outre :

- la fourniture de la caractéristique de bruit de fond audit premier détecteur vocal primaire, une vitesse ou une taille de mise à jour de la caractéristique de bruit de fond étant basée sur la décision de musique produite « vad_music ».

12. Noeud d'un système de télécommunications qui comprend un détecteur d'activité vocale (20 ; 30) selon l'une quelconque des revendications 1 à 7.

13. Noeud selon la revendication 12, qui est un terminal (60).

## Fig. 1 (Prior Art)

## Fig. 2

Fig. 3

Fig. 4

| VADL | | DTX Activity (%) | | DTX Activity (%) 20 dB SNR | | DTX Activity (%) 10dB SNR | | |
|---|---|---|---|---|---|---|---|---|
| | | VADR | VADL | VADR | VADL | VADR | VADL | |
| Speech | american_all | 62,81 | 63,91 | 66,86 | 66,48 | 65,74 | 65,07 | |
| | chinese_all | 58,63 | 60,07 | 62,08 | 61,68 | 60,71 | 59,53 | |
| | english_all | 61,64 | 62,61 | 65,24 | 64,82 | 63,92 | 63,27 | |
| | german_all | 71,59 | 72,44 | 74,73 | 74,03 | 73,45 | 72,33 | |
| | swedish_all | 43,92 | 45,05 | 48,05 | 47,55 | 47,34 | 46,96 | |

| | | DTX Activity (%) DSM MSIN | | DTX Activity (%) MSIN | | | VADL-VADR | |
|---|---|---|---|---|---|---|---|---|
| | | VADR | VADL | VADR | VADL | | DSM MSIN | MSIN |
| Babble | Babble1_k700_hfreeb | 70,00 | 12,52 | 74,25 | 69,63 | | -57,48 | -4,62 |
| | Babble2_k700b | 32,28 | 5,31 | 29,73 | 5,82 | | -26,97 | -23,91 |
| | Babble3_NTTb | 28,02 | 3,32 | 30,79 | 3,08 | | -24,70 | -27,71 |
| | Babble4_wd71b | 81,41 | 15,52 | 82,72 | 14,53 | | -65,89 | -68,19 |
| | Babble5_NTTb | 59,64 | 9,58 | 59,26 | 9,53 | | -50,06 | -49,73 |
| | BabbleSecondaryTalker_k700_b | 87,78 | 41,08 | 88,67 | 38,83 | | -46,70 | -49,84 |
| | babble71b | 79,00 | 17,09 | 78,16 | 14,30 | | -61,91 | -63,86 |
| Syn. Babble | babble_32 | 98,93 | 13,57 | 98,20 | 78,93 | | -85,36 | -19,27 |
| | babble_64 | 44,20 | 2,57 | 35,57 | 2,50 | | -41,63 | -33,07 |
| | babble_128 | 12,40 | 2,57 | 10,63 | 2,37 | | -9,83 | -8,26 |
| Music | delerio_mind | 98,56 | 99,13 | 98,77 | 99,14 | | 0,57 | 0,37 |
| | macho_polska | 94,88 | 93,05 | 94,29 | 93,56 | | -1,83 | -0,73 |
| | mi_tierra | 99,08 | 99,29 | 98,96 | 99,35 | | 0,21 | 0,39 |
| | nina_linda | 99,12 | 99,21 | 99,15 | 99,22 | | 0,09 | 0,07 |
| | nothing_else_matters | 93,18 | 97,61 | 92,75 | 97,75 | | 4,43 | 5,00 |
| | of_course_i_am_lying | 91,34 | 98,60 | 86,37 | 84,09 | | 7,26 | -2,28 |
| | orinoco_flow | 94,22 | 94,45 | 93,33 | 87,16 | | 0,23 | -6,17 |
| | para_estar_contigo | 98,40 | 98,89 | 98,35 | 98,89 | | 0,49 | 0,54 |
| | primitive_man | 97,24 | 96,19 | 96,66 | 95,87 | | -1,05 | -0,79 |
| | solo_palabras | 98,94 | 99,07 | 98,89 | 99,09 | | 0,13 | 0,20 |
| Car | BENZ_1 | 1,94 | 0,90 | 1,57 | 0,79 | | -1,04 | -0,78 |
| | BENZ_2 | 3,88 | 0,90 | 2,36 | 0,88 | | -2,98 | -1,48 |
| | BENZ_3 | 9,06 | 1,30 | 5,06 | 1,30 | | -7,76 | -3,76 |
| | BENZ_4 | 11,53 | 1,28 | 9,24 | 1,21 | | -10,25 | -8,03 |
| | wd55 | 3,33 | 2,23 | 3,27 | 2,23 | | -1,10 | -1,03 |
| | wd56 | 27,06 | 10,50 | 26,09 | 10,90 | | -16,56 | -15,19 |
| | wd57 | 7,03 | 3,53 | 6,03 | 3,60 | | -3,50 | -2,43 |
| | wd58 | 4,03 | 2,50 | 3,83 | 2,57 | | -1,53 | -1,27 |
| | wd59 | 48,72 | 11,46 | 47,55 | 7,43 | | -37,26 | -40,12 |
| White | white_norm | 1,63 | 0,77 | | | | -0,86 | 0,00 |

Table 1

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 2007000118 W
- US 5963901 A1
- US 6424938 B1
- US 5742734 A1
- US 5410632 A1
- US 5276765 A1
- US 5749067 A1
- WO 02065457 A2

**Non-patent literature cited in the description**

- Adaptive Multi-Rate (AMR) speech codec; Voice Activity Detector (VAD. *3GPP TS 26.094 V7.0.0,* July 2006
- Enhanced Variable Rate Codec, Speech Service Option 3 for Wideband Spread Spectrum Digital Systems. *3GPP2, C.S0014-A v1.0,* May 2004
- Adaptive Multi-Rate (AMR); ANSI C source code. *3GPP TS 26.073 V7.0.0,* July 2006
- Software tools for speech and audio coding standardization. *ITU-T G.191,* September 2005
- Adaptive Multi-Rate (AMR) speech codec; Source Control Rate Operation. *3GPP TS 26.093 V7.0.0,* July 2006